(19) **Europäisches Patentamt / European Patent Office / Office européen des brevets**

(11) **EP 1 556 706 B1**

(12) **EUROPEAN PATENT SPECIFICATION**

(45) Date of publication and mention
of the grant of the patent:
**03.01.2007 Bulletin 2007/01**

(51) Int Cl.:
***G01P 3/489*** *(2006.01)*

(21) Application number: **03748989.5**

(86) International application number:
**PCT/US2003/023901**

(22) Date of filing: **31.07.2003**

(87) International publication number:
**WO 2004/029634 (08.04.2004 Gazette 2004/15)**

(54) **ADAPTABLE SPATIAL NOTCH FILTER**

ADAPTIVES RÄUMLICHES NOTCH-FILTER

FILTRE COUPE-BANDE SPATIAL ADAPTABLE

(84) Designated Contracting States:
**AT BE BG CH CY CZ DE DK EE ES FI FR GB GR HU IE IT LI LU MC NL PT RO SE SI SK TR**

(30) Priority: **26.09.2002 US 255435**

(43) Date of publication of application:
**27.07.2005 Bulletin 2005/30**

(73) Proprietor: **3M Innovative Properties Company**
**St. Paul, MN 55133-3427 (US)**

(72) Inventor: **CARLSON, Daniel, H.**
**Saint Paul, MN 55133-3427 (US)**

(74) Representative: **Vossius & Partner**
**Siebertstrasse 4**
**81675 München (DE)**

(56) References cited:
**EP-A- 0 469 617        EP-A- 1 191 310**
**GB-A- 2 266 976        US-A- 4 924 166**
**US-A- 5 559 689        US-A- 5 889 398**
**US-B1- 6 219 196**

- **PATENT ABSTRACTS OF JAPAN vol. 013, no. 445 (E-829), 6 October 1989 (1989-10-06) & JP 01 170396 A (YASKAWA ELECTRIC MFG CO LTD), 5 July 1989 (1989-07-05)**
- **DATABASE WPI Section EI, Week 198449 Derwent Publications Ltd., London, GB; Class V06, AN 1984-305607 XP002275615 & SU 1 084 934 A (KHARK AUTO ROAD INST), 7 April 1984 (1984-04-07)**
- **PATENT ABSTRACTS OF JAPAN vol. 007, no. 150 (P-207), 30 June 1983 (1983-06-30) & JP 58 060315 A (RICOH KK), 9 April 1983 (1983-04-09)**
- **PATENT ABSTRACTS OF JAPAN vol. 2002, no. 11, 6 November 2002 (2002-11-06) & JP 2002 188936 A (TOKYO GAS CO LTD), 5 July 2002 (2002-07-05)**

**Description**

**TECHNICAL FIELD**

The invention relates to closed-loop control systems, such as systems for controlling manufacturing processes.

**BACKGROUND**

Continuous feed manufacturing systems, such as manufacturing systems used to produce paper, film, tape, and the like, often include one or more motor-driven rollers. These systems often include electronic controllers that output control signals to engage the motors and drive the motors at pre-determined speeds. A typical controller often monitors the speed of the motor, the roller, or both, with a feedback circuit, and adjusts the control signal to compensate for any detected error an angular velocity.

The feedback signals, in addition to conveying information about the performance of the system components, may also include noise. In general, the noise is useless information, and is unrelated to the true performance of the components of the system.

In EP 469 617 A1 a closed-loop feedback control system is disclosed for controlling an operation of a load. An actual operation signal is subtracted from a reference operation signal to produce a resultant signal which is used to control the operation of the load. A filter unit, such as a notch filter, operates to suppress any machine resonance frequencies found in the operation signal due to load fluctuations, machine variations, operating environment changes, deterioration with age, etc. A filter coefficient of the filter unit is adjusted so that any fluctuation in the resonance frequency can be suppressed effectively.

**SUMMARY**

In general, the invention relates to controlling a notch filter as a function of an angular velocity of one or more components of a system. For example, a center frequency of a notch filter may be dynamically controlled as an angular velocity of a motor within a manufacturing environment changes. The notch filter may attenuate noise occupying a frequency band in a feedback signal.

In a feedback system, such as a system in a manufacturing environment or a system that precisely controls the velocity of one or more components, sensors monitor the operation of the components of the system. The sensors generate one or more feedback signals that reflect the performance of the components, and a controller controls the operation of the system in response to the feedback signals. In an exemplary system discussed below, a controller controls the angular velocity of a motor, which in turn drives another component such as a roller. Sensors monitor the angular velocities of the motor, roller or both, and generate feedback signals that reflect the angular velocities.

A feedback signal includes data that reflects component performance, such as the angular velocity of a monitored component. A feedback signal may also include false data that do not reflect component performance. Some false data or noise is related to the geometries of components in the system. In other words, some noise disturbances are correlated to physical features of the system and do not indicate actual disturbances in component performance. The physical features of the system that generate the noise disturbances are spatially, rather than temporally, distributed. Although the physical features may move over time, the physical features do not move spatially relative to other components in the system.

Noise may be caused, for example, by physical imperfections that are spatially distributed on a motor shaft monitored by a sensor. As the motor turns, the shaft with the imperfections turns as well. The imperfections may affect a feedback signal generated by the sensor that senses the position or rotational speed of the shaft, and thereby introduce noise into the feedback signal. The sensor detects the physical imperfections of the shaft, and interprets the imperfections as variations in the position or angular velocity of the shaft. As a result, the feedback signal includes noise indicating variations in the position or angular velocity of the shaft, when in fact there may be no variations in the position or angular velocity of the shaft. This noise does not accurately reflect the true position or angular velocity of the shaft.

Other physical features in the system may contribute to noise in the feedback signal as well. Physical features of the sensor, for example, may contribute to periodic noise that indicates variations in position or angular velocity, when no such variations are actually present.

Noise caused by physical features spatially distributed in the system is periodic and manifests itself in a frequency band in the feedback signal. The frequency of the noise is a function of the spatial distribution of the features and the angular velocity of rotating components. As the angular velocity of a motor changes, for example, the angular velocity of the shaft changes as well, and sensors encounter the physical imperfections in the shaft more frequently. Accordingly, the frequency of the noise caused by the imperfections changes as well. In particular, the center frequency of the noise frequency band changes with the angular velocity of the rotating components. In addition, the center frequency of the noise frequency band may change linearly as the angular velocity changes.

A controller governs the angular velocity of one or more these components. The noise may interfere with the operation of the controller. In particular, the noise may cause the controller to correct for conditions, such as variations in angular velocity, that are not actually taking place. Accordingly, the invention provides a notch filter that attenuates the noise created by spatially distributed physical features.

The notch filter, which may be a digital filter implemented by a digital processor, includes an adaptable center frequency. As the angular velocity of a rotating component of the system changes, the frequency of the noise created by spatially distributed physical features changes linearly with the angular velocity. Accordingly, the center frequency of the notch filter changes linearly with the angular velocity as well. In this way, the center frequency of the notch filter tracks the noise when the noise frequency changes, and continues to reject the noise.

In some circumstances, a signal may include noise in two or more frequency bands. Two or more notch filters may be controlled with different center frequencies to reject the different noise frequencies. Each of the notch filter center frequencies is adaptable to changes in angular velocity.

In one embodiment, the invention is directed to a method comprising receiving a speed signal representing an angular velocity, and attenuating a frequency band of a feedback signal as a function of the angular velocity. The angular velocity may be, for example, a target angular velocity included in a reference signal. The speed signal may represent the angular velocity by representing angular velocity itself or a quantity that is a function of angular velocity, such as rotational position or angular acceleration.

In another embodiment, the invention is directed to a system that includes a motor operable to drive a rotating component in response to a motor control signal and a sensor to generate a feedback signal representing a measurement of the rotating component. The system further includes a filter that receives the feedback signal and attenuates a frequency band of the feedback signal as a function of an angular velocity. The angular velocity may be a target angular velocity. The system may also include a controller to generate the motor control signal as a function of the filtered feedback signal.

In a further embodiment, the invention presents a method, comprising rotating a component at an angular velocity, changing the angular velocity and identifying in a feedback signal responsive to the rotation at least one frequency of a periodic signal that changes linearly with the change in angular velocity. The identified periodic signal may encode useful information or useless noise, and the method may also include techniques for distinguishing useful information from noise. A notch filter may be selected to suppress the periodic signal, and the method may also include changing the center frequency of the notch filter linearly with the change in angular velocity.

In another embodiment, the invention is directed to a method comprising identifying in a signal at least one frequency band of noise generated by one or more spatially distributed physical features on at least one rotating component having an angular velocity, and computing a center frequency for a notch filter as a function of the angular velocity.

In an additional embodiment, the invention presents an apparatus comprising a pre-processing unit that receives and samples a feedback signal and a processor that receives a reference signal indicating a target angular velocity and filters the sampled feedback signal with a notch filter. A center frequency of the notch filter is a function of the target angular velocity. The apparatus may also include a current driver driven by the processor as a function of the target angular velocity and the filtered feedback signal.

In a further embodiment, the invention is directed to a method for setting a sampling frequency. The method includes identifying a fundamental frequency as a function of an angular velocity, identifying a harmonic of the fundamental frequency and setting a sampling frequency for sampling a feedback signal as a function of the fundamental frequency and the harmonic. This technique may be used to tune a notch filter.

In an added embodiment, the invention is directed to a device comprising a sensor to generate a signal representing a measurement of a rotating component and a filter that attenuates a frequency band of the signal as a function of an angular velocity. The device may be implemented as a self-contained sensor, for example, that generates a signal as a function of a measurement of a rotating component and filters the signal as a function of the angular velocity of the rotating component.

The invention may present a number of advantages. The adaptive notch filter is well-suited for rejecting noise due to physical features in the system, and is especially helpful in rejecting some kinds of noise that are due to spatial disturbances and that do not reflect the actual performance of system components. As the center frequency of the noise changes with angular velocity, the frequency band rejected by a notch filter changes with the angular velocity as well. The notch continues to track and suppress the noise. In addition, the noise is rejected without regard to the phase of the noise.

With the adaptive notch filter, the controller can be made very responsive to the feedback signals. Because noise created by spatially distributed physical features is attenuated by the notch filter, the controller will not respond to the noise. Accordingly, the controller can respond quickly to signals that reflect actual component performance, with less risk of responding to signals that do not reflect actual component performance. The adaptive notch may also be faster and more efficient than many other techniques for noise rejection.

The details of one or more embodiments of the invention are set forth in the accompanying drawings and the description below. Other features, objects, and advantages of the invention will be apparent from the description and drawings, and from the claims.

**BRIEF DESCRIPTION OF DRAWINGS**

FIG. 1 is a block diagram illustrating an example system in which a controller drives a roller.
FIG. 2 is a flowchart providing an overview of the operation of an adaptable notch filter.
FIG. 3 is a block diagram illustrating a feedback system with notch filters in series.
FIG. 4 is a graph illustrating an example feedback signal within the frequency domain, including noise in two frequency bands.
FIG. 5 is a graph illustrating the example feedback signal of FIG. 4 following filtering by notch filters.
FIG. 6 is a block diagram illustrating an example embodiment of the controller in further detail.
FIG. 7 is a flow diagram illustrating techniques for identifying noise sources.
FIG. 8. is a flow diagram illustrating a technique for selecting parameters for sampling of a feedback signal.

**DETAILED DESCRIPTION**

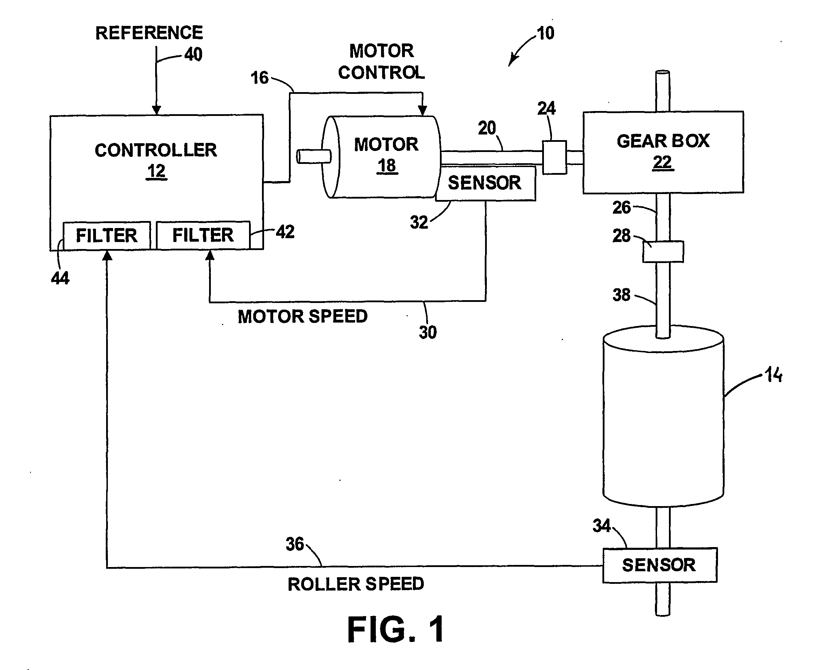

FIG. 1 is a block diagram illustrating an example system 10 in which a controller 12 controls the angular velocity of a rotating component, such as a roller 14. System 10 may be used in a variety of applications, including a continuous feed manufacturing environment to produce paper, film, tape, and the like. Roller 14 may be, for example, a precision web-handling roller within a manufacturing environment.

Controller 12 outputs motor control signals 16 to motor 18, which drive roller 14. Motor control signals 16 may be one or more current signals generated by a current driver (not shown in FIG. 1) under the control of controller 12. Motor 18 drives shaft 20 in response to motor control signals 16. Shaft 20 is mechanically coupled to gear box 22 via coupler 24. Gear box 22 in turn drives shaft 26, which is mechanically coupled to roller 14 via coupler 28. Gear box 22 may comprise a number of gears to provide a suitable gear ratio to drive roller 14. Gear box 22 is an exemplary subsystem for transmission of power and is not limited to gears, but may include components such as belt drives.

Controller 12 receives motor speed signal 30 indicative of the angular velocity of shaft 20. Motor speed signal 30 may be supplied by a sensor 32 that generates a signal as a function of the angular velocity of shaft 20 coupled to motor 18. In addition, controller 12 receives from sensor 34 a roller speed signal 36 that is a function of the angular velocity of shaft 38 coupled to roller 14. Sensors 32 and 34 may comprise, for example, sine encoders mounted to shaft 20 of motor 18 and to shaft 38 of roller 14, respectively. Sensors 32 and 34 may supply position-encoded motor and roller speed signals 30, 36 to controller 12.

The invention is not limited to sine encoder sensors, nor is the invention limited to systems that include sensors that sense rotational position. The invention may be implemented with sensors that measure any quantity or quantities that can represent an angular velocity. For example, angular velocity may be derived from rotational position by differentiating, and may be derived from angular acceleration by integrating. The invention also encompasses sensors that sense other quantities that may represent an angular velocity, such as a pressure sensor that measures a pressure differential.

Feedback signals 30, 36 may include periodic signals caused by physical features of system 10. Physical features causing the periodic signals may include physical imperfections that are spatially, rather than temporally, distributed in system 10. The periodic signals may be caused, for example, by physical imperfections of system components such as motor 18 or shaft 20.

Some of the periodic signals may be useful. For example, physical imperfection in motor 18 may cause some variations in the angular velocity of motor 18. The variations may be detected by sensor 32 and may be fed back on motor speed signal 30.

Other periodic signals caused by physical imperfections of system components, however, may be useless noise. Imperfections spatially distributed on shaft 20, for example, may affect the ability of sensor 32 to generate motor speed signal 30 accurately reflecting the angular velocity of shaft 20. Sensor 32 may interpret the imperfections in shaft 20 as variations in the rotational speed of shaft 20, rather than as variations in the physical structure of shaft 20. As a result, motor speed signal 30 may include a useless periodic signal that indicates that the angular velocity of shaft 20 is time-varying, when in fact the angular velocity of shaft 20 is constant. This useless periodic signal may detrimentally affect the operation of system 10, because controller 12 may compensate for changes in angular velocity based upon motor speed signal 30, and may therefore compensate for changes in angular velocity that are not actually occurring.

Noise caused by spatially distributed physical features in the system is periodic, as opposed to aperiodic noise such as white noise. As a result, the noise of concern tends to concentrate power in a narrow frequency band in the feedback signal. Noise in a narrow frequency band is often a characteristic of sensors such as optical encoders, magnetic sensors and tachometers that generate signals indicating the position of shafts.

The frequency of the noise is a function of the spatial distribution of the features and the angular velocity of rotating components. As the angular velocity of shaft 20 changes, for example, sensor 32 encounters the physical imperfections in shaft 20 more frequently, and the frequency of the noise caused by the imperfections changes as well. The center frequency of the noise frequency band may change linearly as the angular velocity changes.

Controller 12 controls the angular velocity of motor 18, and thereby controls the angular velocity of other rotating components driven by motor 18, such as roller 14 or shaft 20. Controller 12 receives a reference signal 40 that provides a target reference for driving motor 18 or roller 14. A process control unit or other device (not shown), for example, may provide reference signal 40 according to a manufacturing model. Reference signal 40 may comprise a motor speed reference signal, a roller speed reference signal, a motor torque reference signal, and a motor position reference signal, or the like. Based on roller speed signal 36, reference signal 40, motor speed signal 30, or combinations thereof, controller 12 controls motor 18 to regulate the angular velocities of motor 18 as well as the components driven by motor 18.

In a typical manufacturing environment, it is often desirable to maintain the angular velocity of roller 14 at a constant value. Unfortunately, as described above, physical characteristics of system 10 introduce periodic signals into feedback signals 30, 36. Some of the periodic signals may be meaningful signals that truly indicate component performance, and some of the periodic signals may be useless noise. The noise may interfere with maintaining a constant angular velocity of roller 14. Sensor 34 monitoring the rotation of shaft 36, for example, may sense one or more imperfections on shaft 36, and may adjust roller speed signal 36 as a result. Even when shaft 38 is rotating at a constant angular velocity, imperfections in shaft 38 sensed by sensor 34 may cause roller speed signal 36 to indicate an angular velocity that is time-varying.

The frequency of the noise may be within the bandwidth of meaningful signals used in system 10, and may be mistaken for a meaningful signal. The noise may affect the operation of controller 12, which generates motor control signals 16 as a function of one or more feedback signals. As a result, controller 12 may adjust motor control signals 16 to correct a problem that does not exist.

It is undesirable for controller 12 to generate motor control signals 16 as a function of the noise. Noise generated by imperfections in sensors 32 and 34, for example, does not reflect actual performance of components, such as the true angular velocity of shafts 20 and 38. Because the noise is not indicative of actual performance, it is inefficient for controller 12 to generate motor control signals 16 to compensate for the noise. Compensating for the noise may also impair the operation of system 10, because controller 12 may drive motor 18 slower or faster to compensate for nonexistent speed variations. Compensating for nonexistent speed variations may introduce undesirable speed variations where none existed before.

Noise may be caused by a number of different sources. Consequently, several noise frequency bands may be present in system 10. The noise frequency bands for feedback signals generated by sensors 32 and 34, for example, may be distinct.

Passing feedback signals from sensors 32, 34 through notch filters 42, 44 removes a substantial portion of the noise. Notch filters 42, 44 are configured, as described below, as band stop filters that reject the frequency band carrying the noise. Accordingly, motor speed signal 30 passes through notch filter 42, and roller speed signal 36 passes through notch filter 44, and notch filters 42, 44 reject noise in particular frequency bands.

Notch filters 42 and 44 may be implemented as digital filters, as will be described in detail below. Although as shown as included in controller 12, notch filters 42 and 44 may be implemented by one or more digital processors separate from controller 12. Controller 12 uses filtered feedback signals to regulate motor control signals 16, which in turn drive motor 18. Filtered feedback signals are more truly reflective of the actual performance of the components in system 10.

A notch filter defines a range of frequencies to be rejected, with the range centered around a center frequency. The invention includes techniques for adapting one or more notch filters as a function of an angular velocity. In particular, the center frequency attenuated by notch filter 42 may be adapted as a function of an angular velocity represented by reference signal 40, or as a function of the actual measured angular velocity of motor 18 or shaft 20. Similarly, the center frequency of notch filter 44 may be adapted as a function of reference signal 40 or the actual measured angular velocity of roller 14 or shaft 38. The center frequency of notch filter 44 may be adapted as a function of the angular velocity of another rotating component as well.

When notch filters 42, 44 suppress the periodic noise, controller 12 can be made very responsive to feedback signals 30, 36. Because filters 42, 44 have removed the noise, controller 12 can respond quickly to signals reflecting actual component performance, with less risk of responding to signals that do not reflect actual component performance. For example, controller 12 can respond quickly to meaningful signals that truly indicate variations in angular velocity, and ignore noise that falsely indicates variations in angular velocity.

The Laplace transform for filters 42 and 44 can be represented as:

$$TF = \frac{Y(s)}{X(s)} = \frac{s^2 + \omega_n^2}{s^2 + 2\zeta\omega_n s + \omega_n^2} \tag{1}$$

in which $s$ is the Laplace complex frequency variable, $\omega_n$ is the notch filter center frequency (i.e., the frequency to be attenuated) in radians per second, and $\zeta$ is the damping ratio. Damping ratio $\zeta$ determines the width of the notch. In general, a large $\zeta$ results in a wide-width/shallow-depth notch, and a small $\zeta$ results in a narrow frequency band with high attenuation in that band.

Furthermore, the center frequency of the band to be attenuated, $\omega_n$, can be expressed as:

$$\omega_n = \frac{2\pi \cdot RPM \cdot n}{60} \tag{2}$$

in which the number of cycles per unit of time is given in revolutions per minute *(RPM)*. *RPM* is typically a known or target quantity, representing the base angular velocity of a rotating component that should be exhibited when system 10 reaches steady state. *RPM* may be specified, for example, in reference signal 40. *RPM* may also be a measured angular velocity. The factor of $2\pi/60$ converts the units of $\omega_n$ to radians per second.

The variable $n$ represents a scaling factor that linearly relates the center frequency of the noise to the angular velocity. Scaling factor $n$ may be any positive value. In some circumstances, $n$ may be the number of disturbances sensed by a sensor during one rotation of a rotating component. If there is a single disturbance per rotation, for example, then $n = 1$. On a 1,024-line sine encoder, there may be disturbances 1,024 times per rotation due to nonuniformities in the encoder manufacturing process, and in that case, $n = 1,024$. Scaling factor $n$ is an integer with respect to the rotating component that generates the noise, but need not be an integer with respect to other rotating components in the system.

Equation (2) relates the frequency to be attenuated to a known or target angular velocity. If the known or target angular velocity is expressed in units such as cycles per second or radians per minute, different conversion factors may be used to assure that the units of $\omega_n$ will be radians per second.

To implement notch filters 42 and 44 in a digital domain, the transfer function may be converted from the $s$-domain to the z-domain. This may be accomplished by using a bilinear transform that maps $s$ to a digital delay operator z as follows:

$$s = \left(\frac{2}{T}\right)\frac{z-1}{z+1} \tag{3}$$

with $T$ representing the sampling time. With this mapping, the equation

$$s^2 = \left(\left(\frac{2}{T}\right)\frac{z-1}{z+1}\right)^2 = \frac{4}{T^2} \cdot \frac{z^2 - 2z + 1}{z^2 + 2z + 1} \tag{4}$$

may be used to express $s^2$.

Some distortion to the frequency mapping in equations (3) and (4) may result from aliasing and slow sampling. To improve the accuracy of the mapping, the following operation may be performed:

$$\omega_A = \frac{2}{T}\tan\left(\frac{\omega_D \cdot T}{2}\right) \tag{5}$$

in which $\omega_A$ is the notch filter center frequency in the analog domain and $\omega_D$ is the notch filter center frequency in the digital domain. When the sampling rate is sufficiently high relative to the notch filter center frequency, however, the operation shown in equation (5) may be unnecessary, as little distortion occurs between the analog and digital domains.

Assuming the sampling rate is sufficiently high, the transfer function may now be expressed as:

$$TF = \cfrac{\left(\cfrac{4}{T^2} \cdot \cfrac{z^2 - 2z + 1}{z^2 + 2z + 1}\right) + \left(\cfrac{\pi^2 \cdot RPM^2 \cdot n^2}{900}\right)}{\left(\cfrac{4}{T^2} \cdot \cfrac{z^2 - 2z + 1}{z^2 + 2z + 1}\right) + 2\zeta\left(\cfrac{\pi \cdot RPM \cdot n}{30}\right)\left(\cfrac{2}{T}\right)\left(\cfrac{z - 1}{z + 1}\right) + \left(\cfrac{\pi^2 \cdot RPM^2 \cdot n^2}{900}\right)} \qquad (6)$$

To implement the transfer function shown in equation (6), the terms may be arranged as:

$$Y\left(\left(\frac{4}{T^2} + \frac{4\zeta\omega_n}{T} + \omega_n^2\right) + \left(\frac{-8}{T^2} + 2\omega_n^2\right)z^{-1} + \left(\frac{4}{T^2} + \frac{-4\zeta\omega_n}{T} + \varpi_n^2\right)z^{-2}\right) =$$

$$X\left(\left(\frac{4}{T^2} + \omega_n^2\right) + \left(2\omega_n^2 - \frac{8}{T^2}\right)z^{-1} + \left(\frac{4}{T^2} + \omega_n^2\right)z^{-2}\right) \qquad (7)$$

in which the notch filter center frequency is compactly represented as $\omega_n$. By rearranging terms and converting to the time domain, the following finite difference equation is obtained:

$$y(n) = \cfrac{\left[\begin{array}{l}\left(\cfrac{8}{T^2} - 2\omega_n^2\right)y(n-1) + \left(\cfrac{-4}{T^2} + \cfrac{4\zeta\omega_n}{T} - \varpi_n^2\right)y(n-2) + \\[2mm] \left(\cfrac{4}{T^2} + \omega_n^2\right)x(n) + \left(2\omega_n^2 - \cfrac{8}{T^2}\right)x(n-1) + \left(\cfrac{4}{T^2} + \omega_n^2\right)x(n-2)\end{array}\right]}{\left(\cfrac{4}{T^2} + \cfrac{4\zeta\omega_n}{T} + \omega_n^2\right)} \qquad (8)$$

which may be implemented on a digital processor such as a computer. Controller 12 may be one embodiment of such a digital processor. In equation (8), the notch filter center frequency is compactly represented as $\omega_n$, but may be expressed in terms of a known or target angular velocity by substituting the expression found in equation (2).

As shown in equation (2), the noise center frequency is linearly related to the angular velocity of a rotating component. Accordingly, a change in the angular velocity of the rotating component causes a linear change in the noise center frequency. In other words, as the angular velocity scales up or down, the frequencies of the noise shift up or down the frequency spectrum. The noise frequency can be mapped to a notch filter center frequency using equation (2). In particular, $n$ can be found by investigation, as will be described below. In addition, the value of $RPM$, i.e., the base angular velocity in revolutions per unit of time, is a known or target quantity. Accordingly, by equation (2), it is possible to predict the frequency bands of the noise when the system reaches a steady state.

Moreover, according to equation (2), scaling the base angular velocity $RPM$ up or down by a known degree will scale the notch frequency $\omega_n$ up or down by the same degree. When $\omega_n$ is known, a digital notch filter can be implemented as shown in equation (8). In this way, the notch filter adapts to changes in angular velocity and rejects noise frequencies as a function of angular velocity.

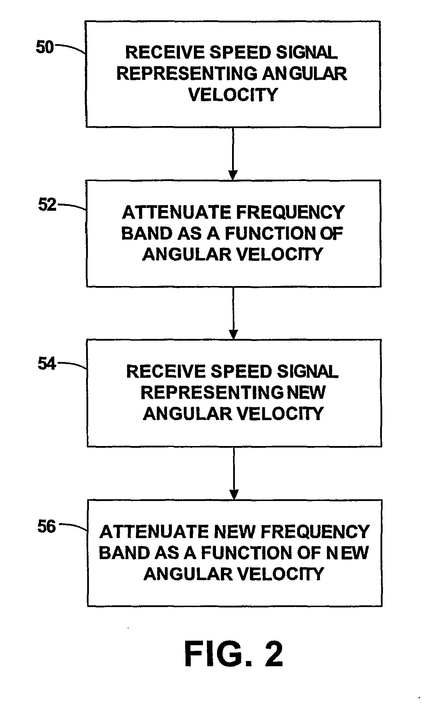

FIG. 2 is a flow diagram illustrating the operation of a digital processor, such as controller 12, that implements an adaptive notch filter. The digital processor receives a signal representing an angular velocity of a rotating component, such as motor 18 or roller 14 (50). The signal may be reference signal 40 representing a base or target angular velocity, for example, or a feedback signal representing a measured angular velocity. The signal may represent an angular velocity by representing any quantity that is a function of angular velocity, such as rotational position. In such a case, the digital processor may derive an angular velocity by, for example, taking the derivative of rotational position.

The processor attenuates or rejects a frequency band as a function of the angular velocity (52). The processor may implement a digital notch filter as described above, controlling the center frequency as a function of the angular velocity. The notch filter center frequency is also a function of scaling factor $n$ and damping ratio $\zeta$, which may be determined by investigation and selected by a system designer.

When the processor receives a signal indicating a change in angular velocity (54), the processor attenuates or suppresses a new frequency band as a function of the new angular velocity (56). The change in angular velocity may be caused by a change in reference signal 40, for example, or may be a measured change in angular velocity of a system component.

More specifically, the center frequency of noise generated by spatial disturbances often changes linearly with angular velocity. The processor controls the center frequency of the notch filter to follow the change in the center frequency of the noise, thereby adaptively controlling the notch filter to suppress the noise. In particular, the processor may compute a new value of $\omega_n$ according to equation (2) (the $n$ and $\zeta$ factors may remain unchanged), and may substitute the new value for $\omega_n$ into equation (8). In this way, the digital processor rejects noise in a frequency band as a function of the angular velocity, and continues to reject the noise even when the frequency band changes. In this manner, the processor may continuously sample one or more speed signals representing angular velocities of one or more rotating components, and adaptively control one or more notch filters based on the signals.

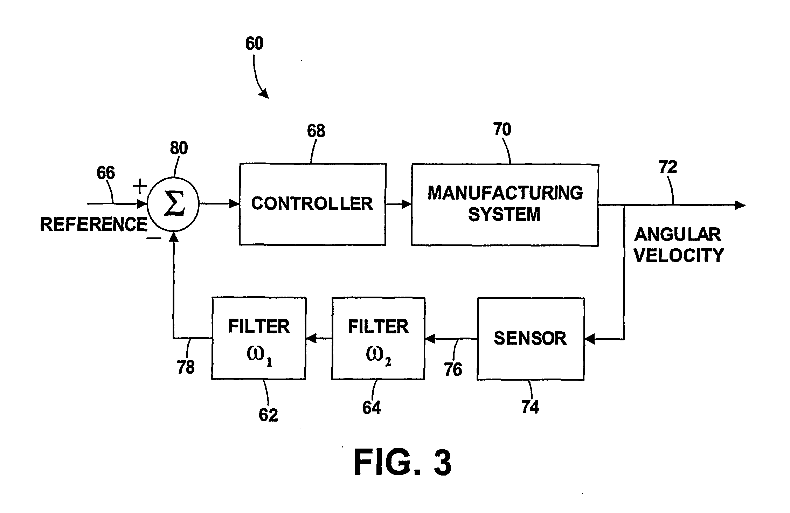

FIG. 3 is a block diagram showing a model 60 of a feedback system with notch filters 62 and 64. Feedback system model 60 receives a reference signal 66. Reference signal 66 is supplied to a controller 68, and controller 68 drives manufacturing system 70 as a function of reference signal 66. The output 72 of manufacturing system 70 is a function of angular velocity, such as rotational position, angular velocity or angular acceleration. Sensor 74 senses output 72. Sensor 74 generates a feedback signal 76 that is filtered by notch filters 62 and 64 and is supplied to controller 68. In feedback system model 60, filtered feedback signal 78 is subtracted 80 from reference signal 66.

Feedback system model 60 may serve as a model for many systems that employ velocity control, such as example system 10 shown in FIG. 1. Feedback system model 60 need not correlate element-by-element to system 10. For example, manufacturing system 70 may correspond to motor 18, shaft 20, roller 14, shaft 38, or any combination thereof, or other components of system 10. Controller 12 in example system 10 may perform the functions of controller 68 and subtraction element 80 in feedback system model 60.

In feedback system model 60, two frequency bands carrying noise have been identified. The noise in these frequency bands may not be indicative of the actual performance of the sensed components and, if not filtered, may detrimentally affect the operation of controller 68. The noise in these frequency bands may arise from different sources. The sources may cause different numbers of disturbances per cycle. In other words, a first noise source may result from features that cause $n_1$ disturbances per cycle, and a second noise source may result from features that cause $n_2$ disturbances per cycle. By equation (2), therefore, the first noise source generates noise at center frequency $\omega_1$ and the second noise source generates noise at center frequency $\omega_2$.

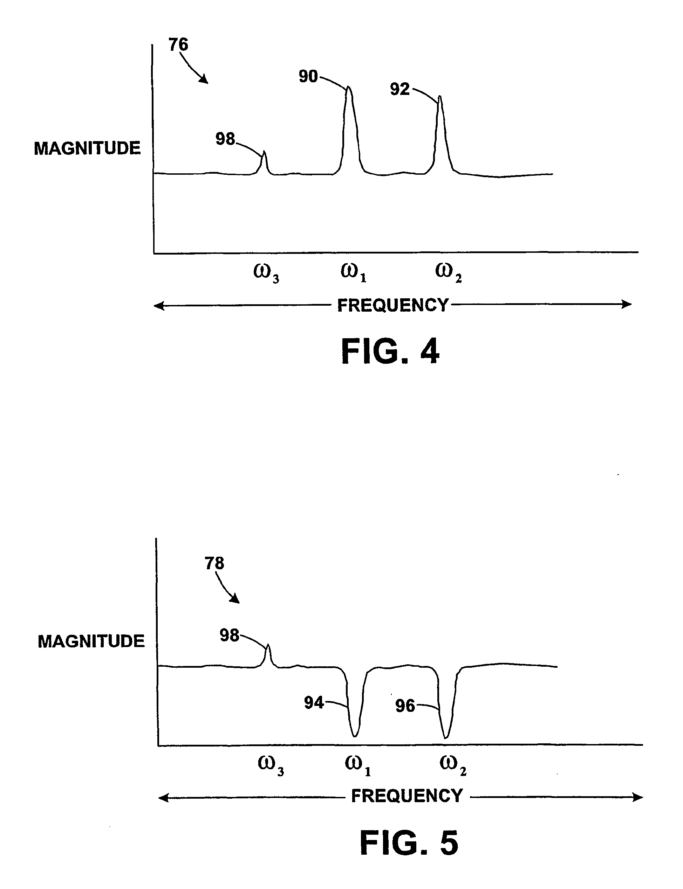

FIG. 4 is a graph illustrating an exemplary unfiltered feedback signal 76 from FIG. 3 in the frequency domain. Unfiltered feedback signal 76 includes a broadband signal with a first noise signal 90 near frequency $\omega_1$ and a second noise signal 92 near frequency $\omega_2$. Controller 68 ordinarily uses the broadband signal to control manufacturing system 70. Noise signals 90 and 92 may affect the operation of controller 68, however, and may cause controller 68 to compensate for errors in component performance that do not actually exist.

FIG. 5 is a graph illustrating filtered feedback signal 78 from FIG. 3 in the frequency domain. Notch filters 62 and 64 have removed noise having center frequencies of $\omega_1$ and $\omega_2$, respectively, and have allowed signals in other frequency bands to pass. Consequently, filtered feedback signal 78 includes a first attenuated frequency band 94 near frequency $\omega_1$ and a second attenuated frequency band 96 near frequency $\omega_2$. Noise signals 90 and 92 have been filtered from the broadband signal.

Unfiltered feedback signal 76 in FIG. 4 and filtered feedback signal 78 in FIG. 5 include a third signal 98 in a narrow frequency band near frequency $\omega_3$. Third signal 98 represents a meaningful signal that reflects the true performance of a system component. Like noise signals 92 and 94, third signal 98 may occupy a narrow frequency band. In some cases, the center frequency of third signal 98 may vary linearly with the angular velocity of a rotating component, like noise signals 92 and 94. Third signal 98 may represent, for example, an imperfection in a motor that causes an actual variation in the angular velocity of the motor one or more times per rotation. As shown in FIG. 5, notch filters 62 and 64 have not attenuated the broadband signal near $\omega_3$.

Notch filters 62 and 64 may be realized using techniques described above. In particular, the center frequencies to be rejected may be determined by application of equation (2), and a digital notch filter for each center frequency may be implemented as shown in equation (8). Each notch filter adapts to changes in angular velocity and rejects noise frequencies as a function of angular velocity. As center frequencies $\omega_1$ and $\omega_2$ change with angular velocity, the center frequencies of notch filters 62 and 64 change with angular velocity as well, following and suppressing noise signals 90, 92.

The series configuration of notch filters 62 and 64 shown in FIG. 3 is exemplary. Any number of filters may be used, and the filters need not be arranged as shown. In the case of independent feedback signals such as is depicted in FIG. 1, for example, one or more notch filters may filter each feedback signal. Moreover, notch filters may be implemented with different parameters, such as different $\zeta$ values.

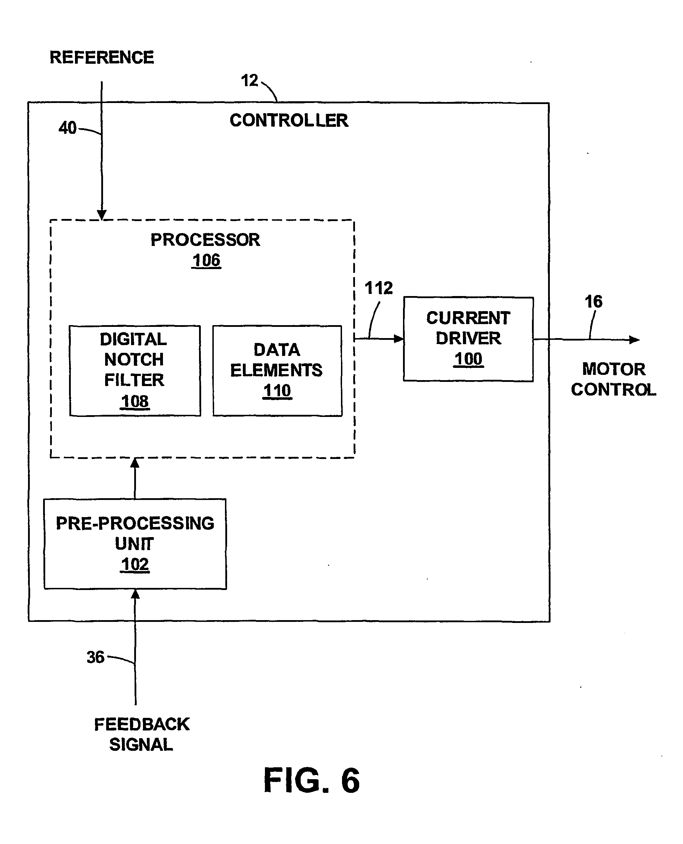

FIG. 6 is a block diagram illustrating an example embodiment of a controller such as controller 12 in FIG. 1. Controller 12 includes a current driver 100 to output motor control signals 16 based on reference signal 40 and a feedback signal such as roller speed signal 36 from sensor 34. In the following discussion, it is assumed that roller speed signal 36 encodes the rotational position of roller 14.

A pre-processing unit 102 conditions and amplifies roller speed signal 36 and converts the feedback signal from analog signals to digital values. In other words, pre-processing unit 102 samples roller speed signal 36 for digital processing. Pre-processing unit 102 may also apply an analog filter prior to sampling. An analog filter such as a band-pass filter may, for example, reject noise outside the bandwidth of meaningful signals, and may help avoid aliasing during sampling. For purposes of the discussion that follows, it is assumed that the analog filter will not stop noise in some frequency bands within the bandwidth of meaningful signals.

Following conversion of the feedback signal to a digital signal, the digital signal is passed to a digital processor 106 for processing. Processor 106 may comprise an embedded microprocessor, conventional microprocessor, a digital signal processor (DSP), dedicated computational hardware, and the like.

Digital processing includes digitally filtering the feedback signal with a digital notch filter 108 using techniques described above. Processor 106 also generates a high-resolution pulse count, such as 3,600,000 pulses per revolution, based on the line pulses of roller speed signal 36. Based on the pulse count, processor 106 calculates a current angular velocity of roller 14, and generates a set of data elements 110 that relates velocity error of roller 14 to the angular position of roller 14. Processor 106 may, for example, subtract the angular velocity from reference signal 40 to determine an angular velocity error. The noise bands eliminated by digital filtering 108 do not affect the creation of data elements 110.

Processor 106 may store the set of data elements 110 within a storage medium, such as a non-volatile random access memory (NVRAM), FLASH memory or the like. The storage medium may be internal or external to the processor. Processor 106 may also include other memory, such as volatile random access memory, for purposes such as implementing the filtering process of equation (8).

Processor 106 generates a signal 112 based on data elements 110 to represent velocity error as a function of the angular position of roller 14. Signal 112 drives current driver 100.

When the angular velocity of roller 14 changes, such as in response to a change in reference signal 40, processor 106 reconfigures digital notch filter 108 to reject a new center frequency as a function of the new angular velocity, as described above. In this way, digital notch filter 108 rejects noise even if the center frequency of the noise changes with angular velocity.

Although not depicted in FIG. 6, controller 12 may also receive and digitally filter other feedback signals, such as motor speed signal 30 from sensor 32, and may drive current driver 100 as a function of other feedback signals. The configuration of controller 12 may vary in other ways as well. Controller 12 may include, for example, control circuitry that further refines driver signal 112.

The embodiment depicted in FIG. 6 is exemplary. The functions shown in FIG. 6 need not be performed by controller 12. In an alternate embodiment, signal processing and filtering may be performed by a processor in a sensor. In other words, a sensor may generate a signal as a function of a measurement of a rotating component and may also filter the signal as a function of the angular velocity of the rotating component. The sensor may include a digital processor that selects one or more notch filters to suppress noisy frequency bands and prevent those bands from being passed to the controller. The sensor may use measured angular velocities of the rotating component to select and adjust the notch filters.

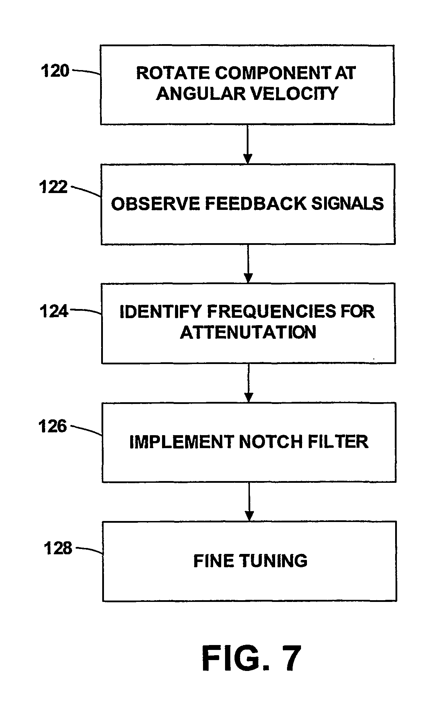

FIG. 7 is a flow diagram illustrating example techniques for identifying noise sources and selecting an adaptable spatial digital notch filter. In general, the spatially distributed physical features that contribute to signals in frequency bands may manifest themselves after the system is constructed. These sources of periodic signals may be varied and difficult to identify with precision. A signal may be identified as originating from spatially distributed physical features if the frequency of the signal changes linearly with a change in angular velocity.

One technique for identifying spatially distributed physical features that contribute to periodic signals includes rotating a system component, such as a motor, roller or shaft, at an angular velocity (120) and observing the feedback signals (122). The feedback signals may include frequency bands with useful data, similar to third signal 98 in FIGS. 4 and 5, and may also include frequency bands with useless noise.

In some cases, the frequency bands with useful data can be readily identified. In other cases, the frequency bands with useful data can be distinguished from the noisy frequency bands by adjusting the gain of a controller such as controller 68 in FIG. 3. A meaningful signal and a noise signal respond differently to changes in gain. Typically, an increase in controller gain makes controller very responsive to signals reflecting actual component performance, so signals reflecting actual component performance may be decreased by an increase in gain. An increase in gain may have an opposite effect upon noise signals, however, and the noise signals may increase in magnitude as the controller tries to correct a problem that does not exist. In this way, the frequencies of noise caused by spatially distributed physical features may be identified (124) by an operator of the system. Noise may also be identified automatically, such as by performing Fast Fourier Transforms (FFT) on the feedback signals and by observing how the frequency components change in response to changes in angular velocity and gain.

When the noise due to spatially distributed physical features is identified, scaling factor $n$ may be computed for each frequency band containing noise caused by spatially distributed physical features. Once $n$ is known, a filter such as the digital notch filter described in equation (8) may be implemented by specification of $n$ (126). The notch filter may be finely tuned (128) by operating the system at different angular velocities and observing whether and to what extent noise is suppressed.

The notch filter may further be fine tuned when the amplitude and phase of the noise in the feedback signal is known. Unfortunately, amplitude and phase data may be distorted by the sampling process. The invention provides techniques for sampling the feedback signal to obtain amplitude and phase data without distortion.

A feedback signal $x(n)$ may be sampled in a sampling window, with $N$ samples taken at a sampling rate of $f_s$ samples per second. The sequence of $n$ samples may be represented in a discrete Fourier Transform (DFT) as

$$x(n) = \sum_{k=0}^{N-1} DFT(k) \cdot e^{\frac{j2\pi nk}{N}} \qquad (9)$$

where $2\pi/N$ is a fundamental frequency, $k$ is an integer representing the harmonic or frequency component and $DFT(k)$ is coefficient of the sequence at the $k$th harmonic. $DFT(k)$ for any value of $k$ is found by the equation

$$DFT(k) = \sum_{n=0}^{N-1} x(n) \cdot e^{\frac{-j2\pi nk}{N}} \qquad (10)$$

which yields a complex value having a magnitude and a phase.

When pre-processing unit 102 samples the feedback signal for processing, pre-processing unit 102 samples the noise. If the frequency of the noise is not an integer multiple of the fundamental frequency $2\pi/N$, then the $DFT(k)$ coefficient for the harmonic closest to the frequency of the noise will not represent the true amplitude and phase of the noise. Rather, two $DFT(k)$ coefficients closest to the frequency of the noise will include an amplitude and phase, and these $DFT(k)$ coefficients will present a distorted representation of the amplitude and phase of the noise.

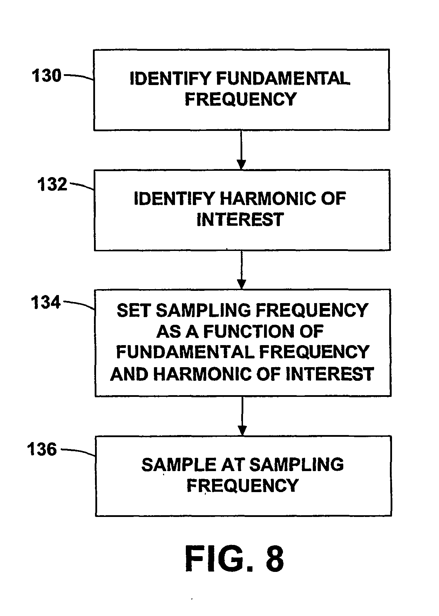

FIG. 8 depicts a technique for setting the sampling parameters to obtain amplitude and phase data without distortion. Processor 106 selects a sampling frequency $f_s$ (or in units of radians, $\omega_s$) for as an integer multiple of a fundamental frequency. The fundamental frequency is a known process frequency, $f_p$ (or in units of radians, $\omega_p$).

In particular, processor 106 identifies a fundamental frequency (130). The fundamental frequency is an angular velocity such as the base angular velocity in equation (2). The frequency of noise due to disturbances caused by distributed physical features may occur at the frequency at which a rotating component rotates, or at a higher harmonic. The harmonic of the noise may be identified as described above (132). The sampling frequency employed by pre-processing unit 102 may then be set by processor 106 as a function of the fundamental frequency and the harmonic of interest (134) as follows:

$$f_s = f_p \cdot \frac{N}{k} \qquad (11)$$

or, in units of radians,

$$\omega_s = \omega_p \cdot \frac{N}{k} \qquad (12)$$

The number of samples in the window, N, may also be changed. For efficient operation of a DFT, however, it may be advantageous to constrain N to particular values.

Pre-processing unit 102 may sample feedback signals at the sampling frequency (136). Selection of the sampling frequency as a function of the angular velocity may result in distortion of amplitude and phase data for signals that are not multiples of the fundamental. Because the goal is to obtain accurate amplitude and phase data for noise signals, however, distortion of other signals may be unimportant.

Harmonic $k$ may be selected to provide accurate values of the magnitude and phase of coefficients at the $k$th harmonic, and some other harmonics as well. For example, selecting sampling frequency $f_s$ to obtain accurate magnitude and phase data for the ninth harmonic may obtain accurate magnitude and phase data for the third harmonic as well.

In the event there are two noise frequencies of interest and the harmonic of one is not a harmonic of the other, then a harmonic could be selected that is the least common multiple of the two harmonics in interest, or the techniques shown in FIG. 8 could be repeated for each harmonic separately.

With the sampling frequency set as described above, the DFT operation shown in equation (10) yields a coefficient representing the magnitude and phase of the noise accurately. When there is one noise signal at a single harmonic or a few noise signals at a few harmonics, performing a DFT operation for those harmonics may be more computationally efficient than performing an FFT. When there are several noise signals at several harmonics, however, an FFT may be more efficient. In either case, the coefficients representing the magnitude and phase of the noise may be used to finely tune the digital notch filter to suppress the noise. For example, damping ratio $\zeta$ may be selected to generate a narrow notch for improved filtering.

The invention may present a number of advantages. The adaptive notch filter is well-suited for rejecting noise due to physical features in the system, and is especially helpful in rejecting some kinds of noise due to spatial disturbances that are not indicative of component performance. As the center frequency of the noise changes with angular velocity, the frequency band rejected by a notch filter changes with the angular velocity as well. The notch continues to reject the noise. In addition, the noise is rejected without regard to the phase of the noise.

With the adaptive notch filter, the controller can be made very responsive to the feedback signals. Because noise created by spatially distributed physical features is attenuated by the notch filter, the controller will not respond to the noise. Accordingly, the controller can implement a high gain to respond quickly to signals reflecting actual performance, with less risk of responding to noise signals. The adaptive notch may also be faster and more efficient than many other techniques for noise rejection, such as repeatedly performing an FFT on one or more feedback signals to identify unwanted frequency components. The notch filter described above is faster and less computationally intense than performing FFT operations.

A number of embodiments of the invention have been described. Nevertheless, various modifications can be made without departing from the scope of the invention. For example, several rotating components having angular velocities have been identified in an exemplary system such as system 10 shown in FIG. 1. Rotating components may include roller 14, roller 14 and shafts 20, 26 and 38. Other components in a system may also rotate, and controller 12 may adapt the center frequency attenuated by a notch filter as a function of the angular velocity of another rotating component.

In addition, damping ratio $\zeta$, which determines the width and attenuation of the notch, need not be constant. In embodiments including multiple notch filters, $\zeta$ may differ from filter to filter. In addition, the $\zeta$ of a single filter may be adjusted to provide good attenuation of noise.

Further, the transfer function shown in equation (1) is the transfer function for a second-order notch filter, but the invention is not limited to second-order filters. Different transfer functions for notch filters may also be used.

The invention may be embodied as a medium that stores one or more instructions to cause a digital processor to implement the techniques described above. Such storage medium may include, for example, NVRAM, FLASH memory, or magnetic or optical storage media. The storage medium may be internal or external to the digital processor. These and other embodiments are within the scope of the following claims.

**Claims**

1. A method comprising:

   receiving a feedback signal representing an angular velocity of a rotating component (14,20),
   selecting a sampling frequency ($f_s$) as a function of a fundamental frequency ($f_p$) associated with the rotating component;
   sampling the feedback signal in accordance with the selected sampling frequency to generate a sampled feedback signal;
   setting a center frequency of a digital notch filter (108) as a function of the angular velocity of the rotating component;
   applying the digital notch filter (108) to attenuate a frequency band of the sampled feedback signal; and
   outputting a control signal to control the rotating component based on the attenuated feedback signal.

2. The method of claim 1, wherein selecting a sampling frequency ($f_s$) comprises selecting a sampling frequency ($f_s$) that is an integer multiple of the fundamental frequency of the rotating component.

3. The method of claim 1, further comprising dynamically adjusting the center frequency of the digital notch filter (108) as a function of a change of the angular velocity.

4. The method of claim 1, wherein setting a sampling frequency ($f_s$) comprises:

   selecting a harmonic (k) of the fundamental frequency ($f_p$) and
   setting the sampling frequency ($f_s$) for sampling the feedback signal as a function of the selected harmonic of the fundamental frequency.

5. The method of claim 1, further comprising:

   selecting a harmonic (k) of the fundamental frequency ($f_p$),
   computing a magnitude and a phase of the feedback signal at the selected harmonic; and
   dynamically adjusting a parameter of the digital notch filter (108) as a function of the computed magnitude and phase of the selected harmonic.

6. The method of claim 5, wherein dynamically adjusting a parameter comprises dynamically adjusting a damping ratio of the digital notch filter (108) as a function of the computed magnitude and phase of the selected harmonic (k).

7. The method of claim 1, further comprising:

   identifying in the feedback signal at least one frequency of a periodic signal that changes linearly with a change in the angular velocity of the rotating component (14, 20);
   calculating a scaling factor as a function of the angular velocity and the frequency of the periodic signal; and
   adjusting the digital notch filter (108) in accordance with the calculated scaling factor.

8. The method of claim 7, wherein setting a center frequency comprises selecting the center frequency to be approximately equal to the frequency of the periodic signal.

9. The method of claim 1, further comprising changing the center frequency of the notch filter (108) linearly with a change in angular velocity of the rotating component (14, 20).

10. The method of claim 1, wherein setting a center frequency comprises:

    identifying in the feedback signal at least one frequency band of noise generated by one or more spatially distributed physical features of the rotating component (14, 20); and
    computing the center frequency for the digital notch filter (108) as a function of the identified frequency band of noise.

11. The method of claim 10, further comprising computing a scaling factor that relates the identified frequency band to the angular velocity.

12. The method of claim 10, further comprising attenuating the frequency band of noise with the digital notch filter (108).

13. A system comprising:

    a motor (18) operable to drive a rotating component (14,20) in response to a motor control signal;
    a sensor (32) to generate a feedback signal representing a measurement of the rotating component (20);
    a pre-processing unit (108) that selects a sampling frequency ($f_s$) as a function of a fundamental frequency ($f_p$) associated with the rotating component and samples the feedback signal to output a sampled feedback signal; and
    a processor (106) to receive the sampled feedback signal and apply a digital notch filter (108) to attenuate a frequency band of the feedback signal as a function of an angular velocity to produce a filtered feedback Signal

14. The system of claim 13, wherein pre-processing unit (102) samples the feedback system at a sampling frequency ($f_s$) that is an integer multiple of the fundamental frequency ($f_p$) of the rotating component.

15. The system of claim 13, wherein the pre-processing unit (102) samples the feedback system at a sampling frequency ($f_s$) that is as a function of a selected harmonic of the fundamental frequency ($f_p$).

16. The system of claim 13, wherein the processor (106) dynamically adjusts a center frequency of the digital notch filter (108) as a function of a change of the angular velocity.

17. The system of claim 13. wherein the processor (106) dynamically adjusts the digital notch filter (108) as a function of a magnitude and a phase of the feedback signal for a harmonic of the fundamental frequency ($f_p$).

18. The system of claim 17, wherein the processor (106) dynamically adjusts a damping ratio of the digital notch filter (108) as a function of the magnitude and phase of the selected harmonic (k).

19. The system of claim 13, wherein the processor (106):

identifies in the feedback signal at least one frequency of a periodic signal that changes linearly with a change in the angular velocity of the rotating component (14,20);
calculates a scaling factor as a function of the angular velocity and the frequency of the periodic signal; and
adjusts the digital notch filter (108) in accordance with the calculated scaling factor to set the center frequency comprises selecting the center frequency to be approximately equal to the frequency of the periodic signal.

20. The system of claim 13, wherein the measurement comprises a position or an angular velocity of the rotating component (14,20).

21. The system of claim 13, further comprising a controller (12) to generate the motor control signal as a function of the filtered feedback signal.

22. The system of claim 13, further comprising a roller (14) coupled to the motor (18).

23. The system of claim 22, wherein the sensor (34) is mounted to a shaft (38) of the roller (14).

24. The system of claim 22, wherein the sensor (32) is mounted to a shaft (20) of the motor (18).

25. The system of claim 13, wherein the sensor (32, 34) outputs a position-encoded speed signal (30, 36).

26. A computer-readable medium comprising instructions to cause a programmable processor (106) to:

receive a feedback signal representing an angular velocity of a rotating component;
select a sampling frequency as a function of a fundamental frequency associated with the rotating component;
wherein a harmonic of the fundamental frequency associated with the rotating component is selected;
sample the feed back signal in accordance with the selected sampling frequency to generate a sample feedback signal;
compute a magnitude and a phase of the feedback signal at the selected harmonic (k);
dynamically set a parameter of a digital notch filter (108) as a function of the computed magnitude and phase of the selected harmonic;
apply the digital notch filter (108) to attenuate a frequency band of the feedback signal; and
output a control signal to control the rotating component (14, 20) based on the attenuated feedback signal.

27. The computer-readable medium of claim 26, wherein the instructions cause the programmable processor (106) to dynamically adjust a damping ratio of the digital notch filter (108) as a function of the computed magnitude and phase of the selected harmonic (k).

28. The computer-readable medium of claim 26, wherein the instructions cause the programmable processor (106) to set a center frequency of the digital notch filter (108) as a function of the angular velocity of the rotating component (14, 20).

29. The computer-readable medium of claim 26, wherein the instructions cause the programmable processor (106) to select a sampling frequency that is an integer multiple of the fundamental frequency ($f_p$) of the rotating component (14, 20).

30. The computer-readable medium of claim 26, wherein the instructions cause the programmable processor (106) to dynamically adjust the center frequency of the digital notch filter (108) as a function of a change of the angular velocity.

**31.** The computer-readable medium of claim 26, wherein the instructions cause the programmable processor (106) to:

identify in the feedback signal at least one frequency of a periodic signal that changes linearly with a change in the angular velocity of the rotating component (14,20),
calculate a scaling factor as a function of the angular velocity and the frequency of the periodic signal; and
adjust the digital notch filter (108) in accordance with the calculated scaling factor.

**32.** The computer-readable medium of claim 31, wherein the instructions cause the programmable processor (106) to select the center frequency to be approximately equal to the frequency of the periodic signal.

**33.** The computer-readable medium of claim 26, wherein the instructions cause the programmable processor (106) to change the center frequency of the notch filter (108) linearly with a change in angular velocity of the rotating component (14, 20).

**34.** The computer-readable medium of claim 26, wherein the instructions cause the programmable processor (106) to:

identify in the feedback signal at least one frequency band of noise generated by one or more spatially distributed physical features of the rotating component (14,20); and
compute the center frequency for the digital notch filter (108) as a function of the identified frequency band of noise.

**Patentansprüche**

**1.** Verfahren, aufweisend:

Aufnehmen eines Rückführungssignals, das eine Winkelgeschwindigkeit einer rotierenden Komponente (14, 20) repräsentiert;
Auswählen einer Abtastfrequenz ($f_s$) als Funktion einer Grundfrequenz ($f_p$), die mit der rotierenden Komponente verknüpft ist;
Abtasten des Rückführungssignals gemäß der gewählten Abtastfrequenz, um ein abgetastetes Rückführungssignal zu erhalten;
Festlegen einer Mittenfrequenz eines digitalen Sperrfilters (108) als Funktion der Winkelgeschwindigkeit der rotierenden Komponente;
Anwenden des digitalen Sperrfilters (108) zum Dämpfen eines Frequenzbandes des abgetasteten Rückführungssignals; und
Ausgeben des Regelsignals zur Regelung der rotierenden Komponente auf der Basis des gedämpften Rückführungssignals.

**2.** Verfahren nach Anspruch 1, wobei das Auswählen einer Abtastfrequenz ($f_s$) das Auswählen einer Abtastfrequenz ($f_s$), die ein ganzzahliges Vielfaches der Grundfrequenz der rotierenden Komponente ist, aufweist.

**3.** Verfahren nach Anspruch 1, das ferner das dynamische Einstellen der Mittenfrequenz des digitalen Sperrfilters (108) als Funktion einer Änderung der Winkelgeschwindigkeit aufweist.

**4.** Verfahren nach Anspruch 1, wobei das Einstellen einer Abtastfrequenz ($f_s$) aufweist:

Auswählen einer Harmonischen (k) der Grundfrequenz ($f_p$); und
Festlegen der Abtastfrequenz ($f_s$) zum Abtasten des Rückführungssignals als Funktion der ausgewählten Harmonischen der Grundfrequenz.

**5.** Verfahren nach Anspruch 1, ferner aufweisend:

Auswählen einer Harmonischen (k) der Grundfrequenz ($f_p$);
Berechnen einer Größe und einer Phase des Rückführungssignals bei der gewählten Harmonischen; und
dynamisches Einstellen eines Parameters des digitalen Sperrfilters (108) als Funktion der berechneten Größe und Phase der gewählten Harmonischen.

**6.** Verfahren nach Anspruch 5, wobei das dynamische Einstellen eines Parameters das dynamische Einstellen eines Dämpfungsverhältnisses des digitalen Sperrfilters (108) als Funktion der berechneten Größe und Phase der gewählten Harmonischen (k) aufweist.

**7.** Verfahren nach Anspruch 1, ferner aufweisend:

Identifizieren im Rückführungssignal mindestens einer Frequenz eines periodischen Signals, die sich linear mit einer Änderung der Winkelgeschwindigkeit der rotierenden Komponente (14, 20) ändert;
Berechnen eines Skalierungsfaktors als Funktion der Winkelgeschwindigkeit und der Frequenz des periodischen Signals; und
Einstellen des digitalen Sperrfilters (108) gemäß dem berechneten Skalierungsfaktor.

**8.** Verfahren nach Anspruch 7, wobei das Festlegen einer Mittenfrequenz das Auswählen der Mittenfrequenz etwa gleich der Frequenz des periodischen Signals aufweist.

**9.** Verfahren nach Anspruch 1, das ferner das Ändern der Mittenfrequenz des Sperrfilters (108) linear mit einer Änderung der Winkelgeschwindigkeit der rotierenden Komponente (14; 20) aufweist.

**10.** Verfahren nach Anspruch 1, wobei das Festlegen einer Mittenfrequenz aufweist:

Identifizieren im Rückführungssignal mindestens eines Frequenzbands von Rauschen, das von einem oder mehreren räumlich verteilten physischen Merkmalen der rotierenden Komponente (14, 20) erzeugt wird; und
Berechnen der Mittenfrequenz für das digitale Sperrfilter (108) als Funktion des identifizierten Frequenzbandes des Rauschens.

**11.** Verfahren nach Anspruch 10, das ferner das Berechnen eines Skalierungsfaktors aufweist, der das identifizierte Frequenzband in Beziehung zur Winkelgeschwindigkeit setzt.

**12.** Verfahren nach Anspruch 10, das ferner das Dämpfen des Frequenzbandes des Rauschens mit dem digitalen Sperrfilter (108) aufweist.

**13.** System, aufweisend:

einen Motor (18), der zum Antrieb einer rotierenden Komponente (14, 20) als Reaktion auf ein Motorregelsignal betrieben werden kann;
einen Sensor (32) zum Erzeugen eines Rückführungssignals, das eine Messung der rotierenden Komponente (20) repräsentiert;
eine Vorverarbeitungseinheit (102), die eine Abtastfrequenz ($f_s$) als Funktion einer Grundfrequenz ($f_p$) auswählt, die mit der rotierenden Komponente verknüpft ist, und das Rückführungssignal zur Ausgabe eines abgetasteten Rückführungssignals abtastet; und
einen Prozessor (106) zum Empfangen des abgetasteten Rückführungssignals und Anwenden eines digitalen Sperrfilters (108) zum Dämpfen eines Frequenzbandes des Rückführungssignals als Funktion einer Winkelgeschwindigkeit, um ein gefiltertes Rückführungssignal zu erzeugen.

**14.** System nach Anspruch 13, wobei die Vorverarbeitungseinheit (102) das Rückführungssystem bei einer Abtastfrequenz ($f_s$) abtastet, die ein ganzzahliges Vielfaches der Grundfrequenz ($f_p$) der rotierenden Komponente ist.

**15.** System nach Anspruch 13, wobei die Vorverarbeitungseinheit (102) das Rückführungssystem bei einer Abtastfrequenz ($f_s$) abtastet, die eine Funktion einer ausgewählten Harmonischen der Grundfrequenz ($f_p$) ist.

**16.** System nach Anspruch 13, wobei der Prozessor (106) eine Mittenfrequenz des digitalen Sperrfilters (108) als Funktion einer Änderung der Winkelgeschwindigkeit dynamisch einstellt.

**17.** System nach Anspruch 13, wobei der Prozessor (106) das digitale Sperrfilter (108) als Funktion einer Größe und einer Phase des Rückführungssignals für eine Harmonische der Grundfrequenz ($f_p$) dynamisch einstellt.

**18.** System nach Anspruch 17, wobei der Prozessor (106) ein Dämpfungsverhältnis des digitalen Sperrfilters (108) als Funktion der Größe und Phase der ausgewählten Harmonischen (k) dynamisch einstellt.

**19.** System nach Anspruch 13, wobei der Prozessor (106):

im Rückführungssignal mindestens eine Frequenz eines periodischen Signals identifiziert, die sich linear mit einer Änderung in der Winkelgeschwindigkeit der rotierenden Komponente (14, 20) ändert;
einen Skalierungsfaktor als Funktion der Winkelgeschwindigkeit und der Frequenz des periodischen Signals berechnet; und
das digitale Sperrfilter (108) gemäß dem berechneten Skalierungsfaktor einstellt, um die Mittenfrequenz festzulegen, wobei die Mittenfrequenz angenähert gleich der Frequenz des periodischen Signals ausgewählt ist.

**20.** System nach Anspruch 13, wobei die Messung eine Position oder eine Winkelgeschwindigkeit der rotierenden Komponente (14, 20)aufweist.

**21.** System nach Anspruch 13, das ferner einen Controller (12) zum Erzeugen des Motorregelsignals als Funktion des gefilterten Rückführungssignals aufweist.

**22.** System nach Anspruch 13, ferner eine Rolle (14) aufweisend, die mit dem Motor (18) verbunden ist.

**23.** System nach Anspruch 22, wobei der Sensor (34) auf einer Welle (38) der Rolle (14) montiert ist.

**24.** System nach Anspruch 22, wobei der Sensor (32) auf einer Welle (20) des Motors (18) montiert ist.

**25.** System nach Anspruch 13, wobei der Sensor (32, 34) ein lagecodiertes Geschwindigkeitssignal (30, 36) ausgibt.

**26.** Computerlesbares Medium, das Anweisungen aufweist, die einen programmierbaren Prozessor (106) veranlassen,

ein Rückführungssignal, das eine Winkelgeschwindigkeit einer rotierenden Komponente repräsentiert, zu empfangen_;
eine Abtastfrequenz als Funktion einer Grundfrequenz auszuwählen, die mit der rotierenden Komponente verbunden ist, wobei eine Harmonische der Grundfrequenz, die mit der rotierenden Komponente verbunden ist, ausgewählt wird;
das Rückführungssignal gemäß der ausgewählten Abtastfrequenz abzutasten, um ein Abtastrückführungssignal zu erzeugen;
eine Größe und eine Phase des Rückführungssignals bei der ausgewählten Harmonischen (k) zu berechnen;
einen Parameter eines digitalen Sperrfilters (108) als Funktion der berechneten Größe und Phase der gewählten Harmonischen dynamisch festzulegen;
das digitale Sperrfilter (108) anzuwenden, um ein Frequenzband des Rückführungssignals zu dämpfen; und
ein Regelsignal auszugeben, um die rotierende Komponente (14, 20) auf der Basis des gedämpften Rückführungssignals zu regeln.

**27.** Computerlesbares Medium nach Anspruch 26, wobei die Anweisungen den programmierbaren Prozessor (106) veranlassen, ein Dämpfungsverhältnis des digitalen Sperrfilters (108) als Funktion der berechneten Größe und Phase der ausgewählten Harmonischen (k) dynamisch einzustellen.

**28.** Computerlesbares Medium nach Anspruch 26, wobei die Anweisungen den programmierbaren Prozessor (106) veranlassen, eine Mittenfrequenz des digitalen Sperrfilters (108) als Funktion der Winkelgeschwindigkeit der rotierenden Komponente (14, 20) festzulegen.

**29.** Computerlesbares Medium nach Anspruch 26, wobei die Anweisungen den programmierbaren Prozessor (106) veranlassen, eine Abtastfrequenz festzulegen, die ein ganzzahliges Vielfaches der Grundfrequenz ($f_p$) der rotierenden Komponente (14, 20) ist.

**30.** Computerlesbares Medium nach Anspruch 26, wobei die Anweisungen den programmierbaren Prozessor (106) veranlassen, die Mittenfrequenz des digitalen Sperrfilters (108) als Funktion einer Änderung der Winkelgeschwindigkeit dynamisch einzustellen.

**31.** Computerlesbares Medium nach Anspruch 26, wobei die Anweisungen den programmierbaren Prozessor (106) veranlassen,
im Rückführungssignal mindestens eine Frequenz eines periodischen Signals zu identifizieren, die sich linear mit einer Änderung in der Winkelgeschwindigkeit der rotierenden Komponente (14, 20) ändert;
einen Skalierungsfaktor als Funktion der Winkelgeschwindigkeit und der Frequenz des periodischen Signals zu berechnen; und
das digitale Sperrfilter (108) gemäß dem berechneten Skalierungsfaktor einzustellen.

**32.** Computerlesbares Medium nach Anspruch 31, wobei die Anweisungen den programmierbaren Prozessor (106) veranlassen, die Mittenfrequenz ungefähr gleich der Frequenz des periodischen Signals zu wählen.

**33.** Computerlesbares Medium nach Anspruch 26, wobei die Anweisungen den programmierbaren Prozessor (106) veranlassen, die Mittenfrequenz des Sperrfilters (108) linear mit einer Änderung der Winkelgeschwindigkeit der rotierenden Komponente (14, 20) zu ändern.

**34.** Computerlesbares Medium nach Anspruch 26, wobei die Anweisungen den programmierbaren Prozessor (106) veranlassen,
im Rückführungssignal mindestens ein Frequenzband von Rauschen zu identifizieren, das von einem oder mehreren räumlich verteilten physischen Merkmalen der rotierenden Komponente (14, 20) erzeugt wird; und
die Mittenfrequenz für das digitale Sperrfilter (108) als Funktion des identifizierten Frequenzbandes des Rauschens zu berechnen.

**Revendications**

**1.** Procédé comprenant :

la réception d'un signal de contre-réaction représentant une vitesse angulaire d'un composant rotatif (14, 20),
la sélection d'une fréquence d'échantillonnage ($f_s$) en fonction d'une fréquence fondamentale ($f_p$) associée au composant rotatif ;
l'échantillonnage du signal de contre-réaction conformément à la fréquence d'échantillonnage sélectionnée afin de générer un signal de contre-réaction échantillonné ;
l'établissement d'une fréquence centrale d'un filtre coupe-bande numérique (108) en fonction de la vitesse angulaire du composant rotatif ;
l'application du filtre coupe-bande numérique (108) afin d'atténuer une bande de fréquences du signal de contre-réaction échantillonné ; et
la production d'un signal de commande afin de commander le composant rotatif d'après le signal de contre-réaction atténué.

**2.** Procédé selon la revendication 1, dans lequel la sélection d'une fréquence d'échantillonnage ($f_s$) comprend la sélection d'une fréquence d'échantillonnage ($f_s$) qui est un multiple entier de la fréquence fondamentale du composant rotatif.

**3.** Procédé selon la revendication 1, comprenant en outre le réglage dynamique de la fréquence centrale du filtre coupe-bande numérique (108) en fonction d'un changement de la vitesse angulaire.

**4.** Procédé selon la revendication 1, dans lequel l'établissement d'une fréquence d'échantillonnage ($f_s$) comprend:

la sélection d'un harmonique (k) de la fréquence fondamentale ($f_p$) ; et
l'établissement de la fréquence d'échantillonnage ($f_s$) pour échantillonner le signal de contre-réaction en fonction de l'harmonique sélectionné de la fréquence fondamentale.

**5.** Procédé selon la revendication 1, comprenant en outre:

la sélection d'un harmonique (k) de la fréquence fondamentale ($f_p$) ;
le calcul d'une grandeur et d'une phase du signal de contre-réaction à l'harmonique sélectionné ; et
le réglage dynamique d'un paramètre du filtre coupe-bande numérique (108) en fonction de la grandeur et de la phase calculées de l'harmonique sélectionné.

**6.** Procédé selon la revendication 5, dans lequel le réglage dynamique d'un paramètre comprend le réglage dynamique d'un rapport d'amortissement du filtre coupe-bande numérique (108) en fonction de la grandeur et de la phase calculées de l'harmonique (k) sélectionné.

7. Procédé selon la revendication 1, comprenant en outre:

l'identification dans le signal de contre-réaction d'au moins une fréquence d'un signal périodique qui change linéairement avec un changement de la vitesse angulaire du composant rotatif (14, 20) ;
le calcul d'un facteur de mise à l'échelle en fonction de la vitesse angulaire et de la fréquence du signal périodique ; et
le réglage du filtre coupe-bande numérique (108) conformément au facteur de mise à l'échelle calculé.

8. Procédé selon la revendication 7, dans lequel l'établissement d'une fréquence centrale comprend la sélection de la fréquence centrale de sorte qu'elle ait une valeur approximativement égale à la fréquence du signal périodique.

9. Procédé selon la revendication 1, comprenant en outre le changement de la fréquence centrale du filtre coupe-bande (108) linéairement avec un changement de la vitesse angulaire du composant rotatif (14, 20).

10. Procédé selon la revendication 1, dans lequel le réglage d'une fréquence centrale comprend :

l'identification dans le signal de contre-réaction d'au moins une bande de fréquences de bruit généré par une ou plusieurs caractéristiques physiques distribuées spatialement du composant rotatif (14, 20) ; et
le calcul de la fréquence centrale du filtre coupe-bande numérique (108) en fonction de la bande de fréquences de bruit identifiée.

11. Procédé selon la revendication 10, comprenant en outre le calcul d'un facteur de mise à l'échelle qui relie la bande de fréquences identifiée à la vitesse angulaire.

12. Procédé selon la revendication 10, comprenant en outre l'atténuation de la bande de fréquences de bruit avec le filtre coupe-bande numérique (108).

13. Système comprenant :

un moteur (18) actionnable pour entraîner un composant rotatif (14, 20) en réponse à un signal de commande de moteur ;
un capteur (32) pour générer un signal de contre-réaction représentant une mesure du composant rotatif (20) ;
une unité de pré-traitement (102) qui sélectionne une fréquence d'échantillonnage ($f_s$) en fonction d'une fréquence fondamentale ($f_p$) associée au composant rotatif et échantillonne le signal de contre-réaction afin de produire un signal de contre-réaction échantillonné ; et
un processeur (106) pour recevoir le signal de contre-réaction échantillonné et appliquer un filtre coupe-bande numérique (108) afin d'atténuer une bande de fréquences du signal de contre-réaction en fonction d'une vitesse angulaire afin de produire un signal de contre-réaction filtré.

14. Système selon la revendication 13, dans lequel l'unité de pré-traitement (102) échantillonne le système de contre-réaction à une fréquence d'échantillonnage ($f_s$) qui est un multiple entier de la fréquence fondamentale ($f_p$) du composant rotatif.

15. Système selon la revendication 13, dans lequel l'unité de pré-traitement (102) échantillonne le système de contre-réaction à une fréquence d'échantillonnage ($f_s$) qui est fonction d'un harmonique sélectionné de la fréquence fondamentale ($f_p$).

16. Système selon la revendication 13, dans lequel le processeur (106) règle dynamiquement une fréquence centrale du filtre coupe-bande numérique (108) en fonction d'un changement de la vitesse angulaire.

17. Système selon la revendication 13, dans lequel le processeur (106) règle dynamiquement le filtre coupe-bande numérique (108) en fonction d'une grandeur et d'une phase du signal de contre-réaction pour un harmonique de la fréquence fondamentale ($f_p$).

18. Système selon la revendication 17, dans lequel le processeur (106) règle dynamiquement un rapport d'amortissement du filtre coupe-bande numérique (108) en fonction de la grandeur et de la phase de l'harmonique (k) sélectionné.

**19.** Système selon la revendication 13, dans lequel le processeur (106) :

identifie dans le signal de contre-réaction au moins une fréquence d'un signal périodique qui change linéairement avec un changement de la vitesse angulaire du composant rotatif (14, 20) ;
calcule un facteur de mise à l'échelle en fonction de la vitesse angulaire et de la fréquence du signal périodique ; et
règle le filtre coupe-bande numérique (108) en fonction du facteur de mise à l'échelle calculé afin d'établir la fréquence centrale, en sélectionnant la fréquence centrale de sorte qu'elle ait une valeur approximativement égale à la fréquence du signal périodique.

**20.** Système selon la revendication 13, dans lequel la mesure comprend une position ou une vitesse angulaire du composant rotatif (14, 20).

**21.** Système selon la revendication 13, comprenant en outre un contrôleur (12) pour générer le signal de commande de moteur en fonction du signal de contre-réaction filtré.

**22.** Système selon la revendication 13, comprenant en outre un rouleau (14) couplé au moteur (18).

**23.** Système selon la revendication 22, dans lequel le capteur (34) est monté sur un arbre (38) du rouleau (14).

**24.** Système selon la revendication 22, dans lequel le capteur (32) est monté sur un arbre (20) du moteur (18).

**25.** Système selon la revendication 13, dans lequel le capteur (32, 34) produit un signal de vitesse codé en position (30, 36).

**26.** Support lisible par ordinateur comprenant des instructions pour amener un processeur programmable (106) à :

recevoir un signal de contre-réaction représentant une vitesse angulaire d'un composant rotatif ;
sélectionner une fréquence d'échantillonnage en fonction d'une fréquence fondamentale associée au composant rotatif ; où un harmonique de la fréquence fondamentale associée au composant rotatif est sélectionné ;
échantillonner le signal de contre-réaction conformément à la fréquence d'échantillonnage sélectionnée afin de générer un signal de contre-réaction échantillonné ;
calculer une grandeur et une phase du signal de contre-réaction à l'harmonique (k) sélectionné ;
établir dynamiquement un paramètre d'un filtre coupe-bande numérique (108) en fonction de la grandeur et de la phase calculées de l'harmonique sélectionné ;
appliquer le filtre coupe-bande numérique (108) afin d'atténuer une bande de fréquences du signal de contre-réaction; et
produire un signal de commande afin de commander le composant rotatif (14, 20) d'après le signal de contre-réaction atténué.

**27.** Support lisible par ordinateur selon la revendication 26, dans lequel les instructions amènent le processeur programmable (106) à régler dynamiquement un rapport d'amortissement du filtre coupe-bande numérique (108) en fonction de la grandeur et de la phase calculées de l'harmonique (k) sélectionné.

**28.** Support lisible par ordinateur selon la revendication 26, dans lequel les instructions amènent le processeur programmable (106) à établir une fréquence centrale du filtre coupe-bande numérique (108) en fonction de la vitesse angulaire du composant rotatif (14, 20).

**29.** Support lisible par ordinateur selon la revendication 26, dans lequel les instructions amènent le processeur programmable (106) à sélectionner une fréquence d'échantillonnage qui est un multiple entier de la fréquence fondamentale ($f_p$) du composant rotatif (14, 20).

**30.** Support lisible par ordinateur selon la revendication 26, dans lequel les instructions amènent le processeur programmable (106) à régler dynamiquement la fréquence centrale du filtre coupe-bande numérique (108) en fonction d'un changement de la vitesse angulaire.

**31.** Support lisible par ordinateur selon la revendication 26, dans lequel les instructions amènent le processeur programmable (106) à :

identifier dans le signal de contre-réaction au moins une fréquence d'un signal périodique qui change linéairement avec un changement de la vitesse angulaire du composant rotatif (14, 20) ;
calculer un facteur de mise à l'échelle en fonction de la vitesse angulaire et de la fréquence du signal périodique ; et
régler le filtre coupe-bande numérique (108) conformément au facteur de mise à l'échelle calculé.

**32.** Support lisible par ordinateur selon la revendication 31, dans lequel les instructions amènent le processeur programmable (106) à sélectionner la fréquence centrale de sorte qu'elle ait une valeur approximativement égale à la fréquence du signal périodique.

**33.** Support lisible par ordinateur selon la revendication 26, dans lequel les instructions amènent le processeur programmable (106) à changer la fréquence centrale du filtre coupe-bande (108) linéairement avec un changement de la vitesse angulaire du composant rotatif (14, 20).

**34.** Support lisible par ordinateur selon la revendication 26, dans lequel les instructions amènent le processeur programmable (106) à :

identifier dans le signal de contre-réaction au moins une bande de fréquences de bruit généré par une ou plusieurs caractéristiques physiques distribuées spatialement du composant rotatif (14, 20) ; et
calculer la fréquence centrale du filtre coupe-bande numérique (108) en fonction de la bande de fréquences de bruit identifiée.

**FIG. 1**

EP 1 556 706 B1

50 — RECEIVE SPEED SIGNAL REPRESENTING ANGULAR VELOCITY

52 — ATTENUATE FREQUENCY BAND AS A FUNCTION OF ANGULAR VELOCITY

54 — RECEIVE SPEED SIGNAL REPRESENTING NEW ANGULAR VELOCITY

56 — ATTENUATE NEW FREQUENCY BAND AS A FUNCTION OF NEW ANGULAR VELOCITY

# FIG. 2

FIG. 3

EP 1 556 706 B1

**FIG. 4**

**FIG. 5**

REFERENCE

12

CONTROLLER

40

PROCESSOR
106

112

16

DIGITAL
NOTCH
FILTER
108

DATA
ELEMENTS
110

CURRENT
DRIVER
100

MOTOR
CONTROL

PRE-PROCESSING
UNIT
102

36

FEEDBACK
SIGNAL

FIG. 6

25

120 — ROTATE COMPONENT AT ANGULAR VELOCITY

122 — OBSERVE FEEDBACK SIGNALS

124 — IDENTIFY FREQUENCIES FOR ATTENUTATION

126 — IMPLEMENT NOTCH FILTER

128 — FINE TUNING

FIG. 7

130 — IDENTIFY FUNDAMENTAL
FREQUENCY

132 — IDENTIFY HARMONIC OF
INTEREST

134 — SET SAMPLING FREQUENCY
AS A FUNCTION OF
FUNDAMENTAL FREQUENCY
AND HARMONIC OF INTEREST

136 — SAMPLE AT SAMPLING
FREQUENCY

## FIG. 8